# EUROPÄISCHE PATENTSCHRIFT

(11) **EP 1 506 921 B1**
(45) Veröffentlichungstag und Bekanntmachung des Hinweises auf die Patenterteilung: **22.11.2006**
(21) Anmeldenummer: 04019282.5
(22) Anmeldetag: 13.08.2004
(51) Int. Cl.: B63G 8/38, B29C 70/86, B29C 70/48

(54) **Ausfahrzylindereinheit eines U-Bootes und Verfahren zu deren Herstellung**
Submarine retractable unit and method for its manufacture
Dispositif rétractable pour un sous-marin et méthode de fabrication

(30) Priorität: 14.08.2003 DE 10337479
(43) Veröffentlichungstag der Anmeldung: 16.02.2005
(73) Patentinhaber: Gabler Maschinenbau GmbH, 23568 Lübeck (DE)
(72) Erfinder: Wäntig, Ulrich, Dipl.-Ing., 23560 Lübeck (DE); Krüger, Lorenz, Dipl.-Ing., 23552 Lübeck (DE); Bosselmann, Jürgen, Dr., 23566 Lübeck (DE)
(74) Vertreter: Hemmer, Arnd

(56) Entgegenhaltungen:
- EP-A- 1 083 345
- EP-A- 1 114 718
- EP-A- 1 177 974
- WO-A-00/35664
- WO-A-95/07428
- DE-A- 2 828 375
- GB-A- 1 258 104
- GB-A- 1 604 736
- US-A1- 2003 000 448
- US-A1- 2003 064 187

## Beschreibung

Die Erfindung geht aus von Ausfahrzylindereinheit eines U-Bootes mit welcher beispielsweise Informationseinrichtungen, Versorgungseinrichtungen und Betätigungseinrichtungen aus ihrer Nicht-Funktionsstellung in ihre Funktionsstellung und wieder zurück verfahren werden.

Bei aufgetaucht fahrenden U-Booten besteht das Problem, dass, wenn aus dem Turm des U-Bootes Informationseinrichtungen und Versorgungseinrichtungen, wie z. B. Antenneneinrichtungen, Radareinrichtungen, Sehrohre und Schnorchel, mittels Ausfahrzylindereinheiten ausgefahren worden sind, die über Funk stattfindende Informationsvermittlung der Antenneneinrichtung und der Betrieb der Radareinrichtung Störungen unterliegt. Diese Störungen werden durch eine so genannte Funk-Schattenwirkung bewirkt, die zu einem nicht unerheblichen Teil durch die ausgefahrenen Zylindereinheiten, insbesondere der Kolbenstangen, der anderen Einrichtungen hervorgerufen wird, die sich in Nähe der Antenneneinrichtung/ Radareinrichtung oder um diese herum befinden und, insbesondere bei ungünstiger Position des U-Bootes, eine Schattenwirkung in Bezug auf die Antenneneinrichtung/ Radareinrichtung hervorrufen. Sollte der Funkverkehr/Radarbetrieb im gegebenen Fall erheblich gestört sein, kann dieser Nachteil dadurch abgemildert werden, dass das U-Boot einen mehr oder weniger großen Bogen fährt, um eine für die Funkübermittlung / den Radarbetrieb günstigere Stellung einzunehmen, was zumindest in zeitlicher Hinsicht ein weiterer Nachteil ist. Eine andere Möglichkeit, diesen Nachteil abzumildern oder auszuschalten, besteht darin, die anderen Einrichtungen abzusenken bzw. in eine niedrigere Funktionsstellung zu verfahren, so dass für die gerade betriebene Antenneneinrichtung möglichst kein Funkschatten bzw. für den Radarbetrieb keine Störung gegeben ist. Dies ist jedoch in Bezug auf das U-Boot aus operativen Gründen bezüglich einer optimalen Nutzung der anderen Einrichtungen nicht immer möglich.

EP 1 177 974 A2 offenbart eine Ausfahreinrichtung für ein Unterseeboot, dabei ist die ausfahrbare Kolbenstange aus einem Kunststoffmaterial ausgebildet, welche an seinem unteren Ende in zwei Trag- und Führungselementen angeordnet sind, die in einer Führungsschiene zum Ausfahren geführt sind. Dies führt zu einer vergleichsweisen großen Anordnung und erfordert eine aufwendige Montage, um eine präzise Führung der Ausfahrzylindereinheit zu gewährleisten.

Es ist Aufgabe der Erfindung, eine verbesserte Ausfahrzylindereinheit eines Unterseebootes bereitzustellen, bei welcher Störungen von Funkwellen und Radarwellen bzw. elektromagnetischen Feldern verringert bzw. vermieden werden und welche einfach und kostengünstig herzustellen ist sowie eine präzise Führung ermöglicht.

Diese Aufgabe wird durch eine Ausfahrzylindereinheit eines Unterseebootes mit den im Anspruch 1 angegebenen Merkmalen gelöst. Bevorzugte Ausführungsformen ergeben sich aus den Unteransprüchen.

Die mit der erfindungsgemäßen Lösung erzielbaren Vorteile bestehen insbesondere darin, dass die axial bewegbare Kolbenstange der Ausfahrzylindereinheit aufgrund ihrer nicht-metallischen Eigenschaft keinen Funkschatten erzeugen bzw. keine Störung von Radarwellen oder eines elektromagnetischen Feldes bewirken kann. Somit ist es möglich, dass andere, z. B. aus dem Turm des U-Bootes, ausfahrbare Einrichtungen in ihre voll ausgefahrene Arbeitsstellung gebracht werden können, ohne dass die erfindungsgemäß ausgebildeten Ausfahrzylindereinheiten für diese anderen Einrichtungen die teilweise oder vollständig ausgefahrene Antenneneinrichtung/Radareinrichtung in ihrer Funktion beeinträchtigen, weil keine funktionsstörende Schattenwirkung oder dergleichen durch diese Ausfahrzylindereinheiten gegeben ist.

Eine vorteilhafte Ausgestaltung der erfindungsgemäßen Kolbenstange besteht darin, dass die genannte Füllung aus Kunststoffverstärkungsfasern z. B. Glasfasern und aus einem diese Verstärkungsfasern miteinander und mit dem äußeren Rohr fest verbindenden Werkstoff besteht. Dieser Werkstoff kann ein aushärtbarer Klebstoff oder ein aushärtbares Gießharz sein. Eine solche Kolbenstange hat eine besonders hohe mechanische Festigkeit und Steifigkeit.

In weiterer Ausbildung können die Kunststoffverstärkungsfasern zu Bündeln gruppiert in dem äußeren Rohr der Kolbenstange angeordnet sein.

In noch weiterer Ausgestaltung weist die erfindungsgemäße Kolbenstange zusätzlich ein inneres Rohr aus Kunststoff mit Gleiteigenschaften auf, wobei das innere Rohr zu dem äußeren Rohr vorzugsweise koaxial angeordnet und der Zwischenraum zwischen diesen beiden Rohren mit der genannten Füllung aus Kunststoff vollständig ausgefüllt ist. Diese Ausbildung der Kolbenstange stellt gleichzeitig auch eine Zylinderfunktion zur Verfügung, so dass in dem inneren Rohr eine weitere Kolbenstange aus Kunststoff angeordnet sein kann. Diese weitere Kolbenstange kann wiederum eine Kolbenstange mit einem inneren Rohr sein. Durch diese Weiterbildung der erfindungsgemäßen Kolbenstange ist eine teleskopierbare Kolbenstange zur Verfügung gestellt.

Vorzugsweise sind das äußere Rohr und/oder das innere Rohr der Kolbenstange aus einem thermoplastischen oder einem duroplastischen Kunststoffmaterial hergestellt. Ein solches thermoplastisches Kunststoffmaterial kann beispielsweise ein Polyoxymethylen, ein Polyetheretherketon oder ein Polyvinylchlorid sein. Ein entsprechendes duroplastisches Kunststoffmaterial kann beispielsweise ein Polyesterharz, ein Polyurethanharz, ein Epoxidharz oder ein Melaminharz sein.

Im Zuge der Ausbildung der erfindungsgemäßen Kolbenstange aus Kunststoff ist es möglich, die Querschnitte eines oder beider Rohre der Kolbenstange im Querschnitt abweichend von einem Kreisverlauf auszubilden, beispielsweise polygonal. Dadurch ist die Möglichkeit einer Drehsicherung der Kolbenstange in ihrem Zylinder gegeben, dessen Kopfteil einen komplementären Durchgang für die polygonale Kolbenstange aufweist. Zusätzlich kann hierdurch erreicht werden, dass die Kolbenstange ein strömungsgünstiges Profil aufweist, so dass sie im ausgefahrenen Zustand einem anströmenden Fluid einen geringen Strömungswiderstand entgegensetzt.

Ferner ist vorzugsweise bei der erfindungsgemäßen Ausfahrzylindereinheit auch der Zylinder aus Kunststoff in Form eines Verbundbauteiles ausgebildet. Der Zylinderkörper besteht aus einem Innenrohr aus gleitfähigem Kunststoffmaterial und einer die Außenseite dieses Innenrohres fest umgebenden Verstärkung aus miteinander verbundenem Kunststofffasermaterial. Die Verstärkung gibt dem Verbundbauteil die erforderliche mechanische Festigkeit, Formstabilität und Steifigkeit. Das Innenrohr des Zylinderkörpers ist vorzugsweise aus einem thermoplastischen oder einem duroplastischen Kunststoffmaterial gefertigt. Ein solches thermoplastisches Kunststoffmaterial kann beispielsweise ein Polyoxymethylen, ein Polyetheretherketon oder ein Polyvinylchlorid sein. Ein entsprechendes duroplastisches Kunststoffmaterial kann beispielsweise ein Polyesterharz, ein Polyurethanharz, ein Epoxidharz oder ein Melaminharz sein.

Gemäß einer besonders bevorzugten Ausführungsform ist es möglich, mit Hilfe der erfindungsgemäßen Kolbenstange eine teloskopierbare Kolbenstange auszubilden. Die teloskopierbare Kolbenstange besteht zumindest aus einer äußeren Kolbenstange, welche ein inneres Rohr aus Kunststoff mit Gleiteigenschaften aufweist, welches zu dem äußeren Rohr der Kolbenstange parallel verlaufend angeordnet ist und zur Aufnahme der inneren Kolbenstange vorgesehen ist. Der Zwischenraum zwischen dem äußeren und dem inneren Rohr der äußeren Kolbenstange ist mit der oben und in den Ansprüchen beschriebenen Füllung aus Kunststoff ausgefüllt. Die innere Kolbenstange weist, wie oben beschrieben, ein äußeres Rohr aus einem Kunststoffmaterial auf, welches Gleitfähigkeitseigenschaften aufweist, sowie eine in diesem Rohr vorgesehene Füllung aus einem Kunststoffmaterial, welche der Kolbenstange die mechanische Festigkeit und Steifigkeit verleiht, wobei die Füllung das Rohr wenigstens teilweise ausfüllt und sich entlang der Innenseite des Rohres erstreckt. Diese innere Kolbenstange ist beweglich im Inneren der äußeren Kolbenstange geführt und auf diese Weise teloskopierbar. Entsprechend können auch mehrere hohl ausgebildete Kolbenstangen vorgesehen sein, welche in ihrem Durchmessermaß jeweils so aufeinander abgestimmt sind, dass jeweils eine kleinere Kolbenstange im Inneren einer größeren Kolbenstange axial beweglich geführt wird. Die letzte, d. h. innerste Kolbenstange muss nicht hohl ausgebildet sein. Vorzugsweise ist diese innere, zuletzt ausfahrbare Kolbenstange aus einem homogenen gleitfähigen Kunststoffmaterial ausgebildet.

Mit dem nachfolgend beschriebenen Verfahren zur Herstellung der Kolbenstange für die Ausfahrzylindereinheit nach der Erfindung ist es auf einfache Weise und mit geringen Kosten möglich, diese nicht metallische Kolbenstange herzustellen. Entsprechend ist es mit dem vorgeschlagenen Verfahren zur Herstellung eines Zylinders für die erfindungsgemäße Ausfahrzylindereinheit möglich, einen Zylinder aus Kunststoff auf einfache Weise und mit geringen Kosten herzustellen.

Gemäß dem Verfahren zur Herstellung einer Kolbenstange für die Ausfahrzylindereinheit wird ein äußeres Rohr der Kolbenstange oder in dem Fall, dass eine hohle Kolbenstange ausgebildet werden soll, ein äußeres und ein inneres Rohr der Kolbenstange bereitgestellt. Im Fall der massiven Kolbenstange wird das Innere des äußeren Rohrs mit Verstärkungsfasern aus Kunststoffmaterial gefüllt. Entsprechend wird im Fall der hohlen Kolbenstange der Zwischenraum zwischen innerem und äußerem Rohr mit Verstärkungsfasern aus Kunststoffmaterial gefüllt. Als Verstärkungsfasern aus Kunststoff können beispielsweise Glasfasern, Kohlefasern, Aramidfasern oder Faserkombinationen aus diesen Fasern verwendet werden. Die Verstärkungsfasern aus Kunststoffmaterial werden in ein aushärtbares Verbindungsmittel eingegossen. Dazu werden die Enden der Rohre zunächst jeweils durch ein Abschlussbauteil verschlossen, welches jeweils eine Arbeitsöffnung aufweist. Durch die eine Arbeitsöffnung wird dann das aushärtbare Verbindungsmittel in das vorgefüllte Rohr eingebracht, in dem an der Arbeitsöffnung des anderen Abschlussbauteils ein Unterdruck bzw. Vakuum angelegt wird. Als aushärtbares Verbindungsmittel wird vorzugsweise ein Gießharz mit Klebwirkung oder ein Klebstoff verwendet.

Der Zylinder für die erfindungsgemäße Ausfahrzylindereinheit wird gemäß dem Verfahren in der Weise hergestellt, dass ein zylindrisches, das Innenrohr des Zylinderkörpers bildendes Rohrstück aus thermoplastischem oder duroplastischem Kunststoffmaterial mit Gleiteigenschaften verwendet wird, welches zunächst an einem Ende mit einem Fußteil und am entgegengesetzten Ende mit einem Kopfteil, welches den Durchlauf einer Kolbenstange erlaubt, versehen wird. Anschließend wird das Rohrstück mit dem Fuß- und dem Kopfteil zur Erzielung eines Zylinderkörpers mit hoher mechanischen Festigkeit und Formsteifigkeit mit verstärkenden Kunststofffasern umwickelt, wobei die Kunststofffasern vor, während oder nach ihrem Wickeln mit einem aushärtbaren Klebstoff oder einem aushärtbaren Gießharz getränkt werden.

Das Rohrstück, das Kopfteil und/oder das Fußteil sind vorzugsweise aus einem thermoplastischen oder duroplastischen Kunststoffmaterial hergestellt. Ein solches thermoplastisches Material kann beispielsweise ein Polyoxymethylen, ein Polyetheretherketon oder ein Polyvinylchlorid sein. Als duroplastisches Kunststoffmaterial können beispielsweise ein Polyesterharz, ein Polyurethanharz, ein Epoxidharz oder ein Melaminharz verwendet werden.

Das thermoplastische oder duroplastische Kunststoffmaterial ist vorzugsweise mit Verstärkungsfasern versehen.

Als verstärkende Kunststofffasern für das zylindrische Rohrstück können beispielsweise Glasfasern, Kohlefasern, Aramidfasern oder auch eine Kombination dieser Fasern verwendet werden.

Die Erfindung ist nachstehend anhand mehrerer, in den anliegenden Zeichnungen dargestellter Ausführungsbeispiele näher erläutert. Die Zeichnungen zeigen jeweils nur die Zylindereinheit und deren Teile der Ausfahrzylindereinheiten für ein Unterseeboot. Die Ausfahrzylindereinheiten dienen zum Ausfahren verschiedener Instrumente, Antennen, Versorgungseinrichtungen, etc. des Unterseebootes. In den Figuren zeigt:
- Fig. 1: Eine Zylindereinheit in Seitenansicht,
- Fig. 2: einen Querschnitt nach der Linie II-II in Fig. 1,
- Fig. 3: einen Längsschnitt durch ein erstes Ausführungsbeispiel einer Kolbenstange,
- Fig. 4: einen Querschnitt nach der Linie IV-IV in Fig. 3,
- Fig. 5: eine alternative Querschnittsausbildung zu dem Beispiel nach Fig. 4,
- Fig. 6: einen Längsschnitt durch ein zweites Ausführungsbeispiel einer Kolbenstange,
- Fig. 7: einen Querschnitt nach der Linie VII-VII in Fig. 6,
- Fig. 8: eine alternative Querschnittsausbildung zu der Darstellung nach Fig. 7 und
- Fig. 9: ein Schema zur Herstellung einer Kolbenstange nach den Figuren 3 und 6.
- Fig. 10: einen axialen Längsschnitt durch ein drittes Ausführungsbeispiel.

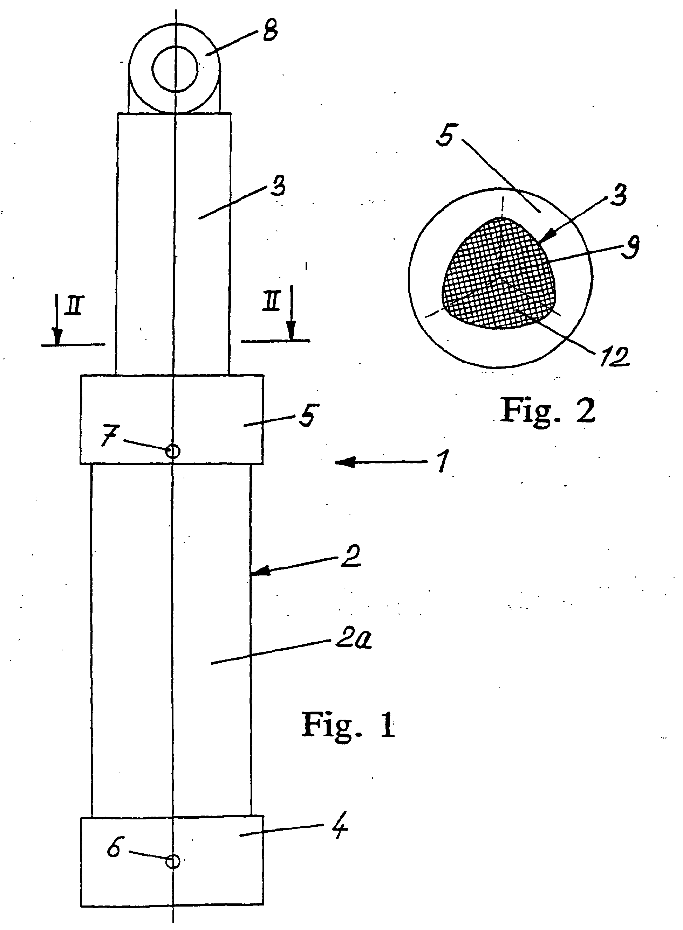

Die Zylindereinheit 1 nach den Fig. 1 und 2 besteht aus einem Zylinder 2 und aus einer axial aus- und einfahrbaren Kolbenstange 3. Der Zylinderkörper 2a des Zylinders 2 ist an seinen beiden Enden in üblicher Weise mit den Abschlussdeckeln 4 und 5 versehen, wobei diese Deckel Öffnungen 6 und 7 zum Zuleiten und Ableiten eines Steuerfluides, z. B. Drucköl oder Druckluft, aufweisen. Die Kolbenstange 3 besitzt im Inneren des Zylinderkörpers 2a einen üblichen Kolben, der auch entfallen kann, wenn die Kolbenstange als Plunger konstruiert ist. Das äußere Ende der Kolbenstange 3 weist ein übliches Befestigungsauge 8 oder ein äquivalentes Verbindungsmittel auf, mit dem die Kolbenstange an der zu bewegenden Vorrichtung, beispielsweise eine Funkeinheit oder eine Radarvorrichtung oder eine optische Informationseinrichtung, befestigt wird.

Die Zylindereinheit 1 ist so gestaltet, dass wenigstens die Kolbenstange 3 aus Kunststoff besteht. Der Zylinder 2 der Zylindereinheit 1 kann, für gewisse Anwendungsfälle, in herkömmlicher Weise aus Metall bestehen; er kann aber auch aus Kunststoff bestehen, wie weiter unten beschrieben ist.

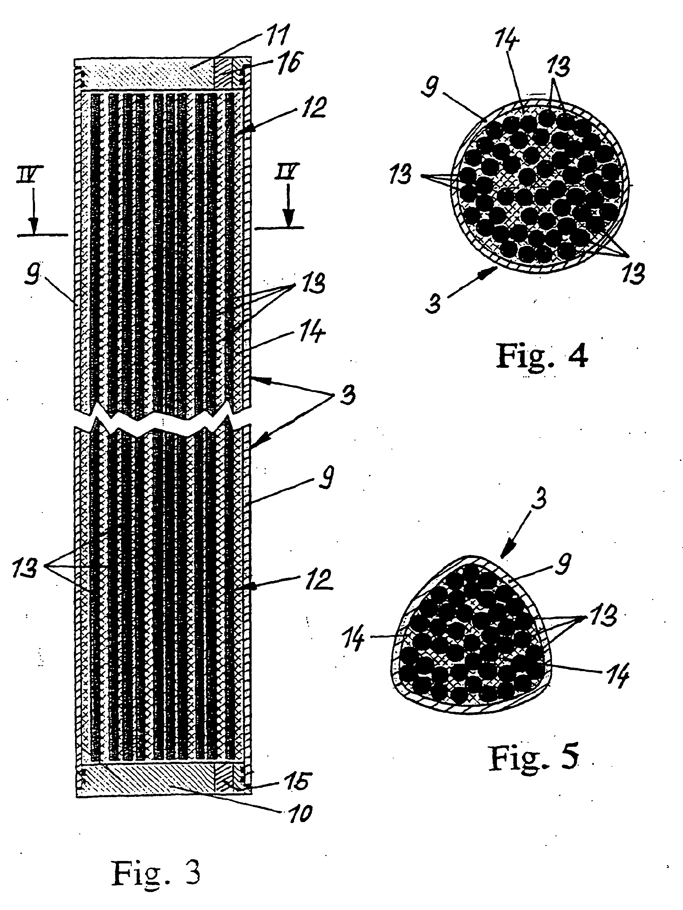

Ein erstes Beispiel einer Kolbenstange 3 aus Kunststoff ist in Fig. 3 gezeigt. Sie umfasst ein äußeres Rohr 9 aus Kunststoffmaterial, das an seinen beiden Enden je mit einem Abschlussteil 10, 11 aus Kunststoff abgedichtet verschlossen ist, und aus einer Füllung 12, die ebenfalls aus Kunststoffmaterial besteht. Diese Kolbenstange ist somit ein so genanntes Verbundbauteil.

Das Kunststoffmaterial für das äußere Rohr 9 der Kolbenstange 3 ist ein Material, das optimale Gleiteigenschaften aufweist, da dieses Material im Betrieb der Zylindereinheit 1 in dem Abschlussdeckel 5 und an dessen Dichtungsmaterial geleitet. Ein solches Material, das optimale Gleiteigenschaften aufweist, ist ein thermoplastisches Kunststoffmaterial, z. B. Polyoxymethylen (POM), Polyetheretherketon (PEEK) oder auch Polyvinylchlorid (PVC). Es kann aber auch ein duroplastisches Kunststoffmaterial verwendet werden, z. B. Polyesterharz, Epoxidharz, Polyurethanharz oder Melaminharz. Diese Harze können mit Verstärkungsfasern versetzt sein, z. B. mit Glasfasern, Kohlefasern oder Aramidfasern oder einer Kombination daraus. Des Weiteren können auch geeignete Gleitmittelzusätze in dem Kunststoffmaterial für das äußere Rohr 9 der Kolbenstange enthalten sein.

Die Füllung 12 der Kolbenstange 3 besteht aus Kunststoffverstärkungsfasern 13 und aus einem diese Verstärkungsfasern miteinander und mit dem äußeren Rohr 9 fest verbindenden Werkstoff 14. In dem gezeigten Beispiel nach Fig. 3 weisen die Verstärkungsfasern 13 eine Länge auf, die im Wesentlichen der Länge der Kolbenstange entspricht. Das Material für die Fasern 13 ist z. B. Glasfaser, Kohlefaser, Aramidfaser oder auch Kombinationen daraus. Wie Fig. 4 zeigt, wird der Innenraum des äußeren Rohres 9 vollständig mit den Verstärkungsfasern 13 gefüllt. Die Lage der Fasern ist hierbei im Wesentlichen zufällig. Die Fasern 13 können in dem Rohr 9 auch so angeordnet sein, dass sie zu einzelnen Bündeln gruppiert sind, so dass das Rohr mit einzelnen Faserbündeln gefüllt ist. Der Werkstoff 14, mit welchem die Verstärkungsfasern 13 miteinander und mit dem äußeren Rohr 9 der Kolbenstange 3 fest verbunden sind, ist ein aushärtbarer Klebstoff oder ein aushärtbares Gießharz. Als Material kommen hierfür z. B. in Frage: Polyester-, Epoxid-, Polyurethan- oder Melaminharze. Diese Materialien dringen vollständig in die zwischen den Verstärkungsfasern befindlichen Hohlräume ein und schaffen nach ihrer Aushärtung einen sicheren Kraftschluss zu den Verstärkungsfasern und zu dem äußeren Rohr 9.

Alternativ kann die Füllung 12 auch aus einem ausgehärteten Brei bestehen, der sich aus dem Gießharz 14 der vorgenannten Art und aus kurzen, darin fein verteilten Verstärkungsfasern der vorgenannten Art zusammensetzt.

Die Füllung 12 gewährleistet eine hohe mechanische Festigkeit und eine hohe Formsteifigkeit der Kolbenstange 3.

Die Abschlussteile 10 und 11 der Kolbenstange 3 weisen Stopfen 15 und 16 vorzugsweise aus Kunststoff auf, mit welchen entsprechende Öffnungen der Abschlussteile verschlossen sind, nachdem das verbindende Gießharz 14 in das äußere Rohr 9 eingeführt worden und ausgehärtet ist.

Fig. 4 zeigt einen kreisrunden Querschnitt des äußeren Rohrs 9 der Kolbenstange 3. Alternativ ist es hierzu möglich, dem äußeren Rohr 9 auch eine von der Kreisform abweichende Querschnittsform zu geben, wie sie in Fig. 5 beispielsweise gezeigt ist. In dieser Figur ist die Querschnittsform polygonal ausgeführt, und zwar dreieckig. Hierbei sind die Ecken abgerundet ausgeführt, und die zwischen den Ecken verlaufenden Umfangsabschnitte des äußeren Rohres 9 sind konvex gewölbt ausgebildet. Im Fall der Verwendung einer Querschnittsform nach Fig. 5 für die Kolbenstange 3 ist selbstverständlich auch der entsprechende Enddeckel 5 des Zylinders 2 mit einer entsprechenden Führungsöffnung für die Kolbenstange versehen. Durch diese Querschnittsausbildung der Kolbenstange kann sich die Kolbenstange relativ zu dem Zylinder 2 nicht verdrehen. Ein weiterer Vorteil einer nicht kreisförmigen Querschnittsausbildung des äußeren Rohrs 9 bzw. der Kolbenstange 3 besteht in der Schaffung eines strömungsgünstigen Anströmungsprofils für die Kolbenstange einer Zylindereinheit für die Betätigung z. B. von Fahrgestellen für Flugzeuge, von Ruderanlagen für Schiffe, von Anlageteilen im Wasserbau oder von Bauteilen von Windkraftanlagen.

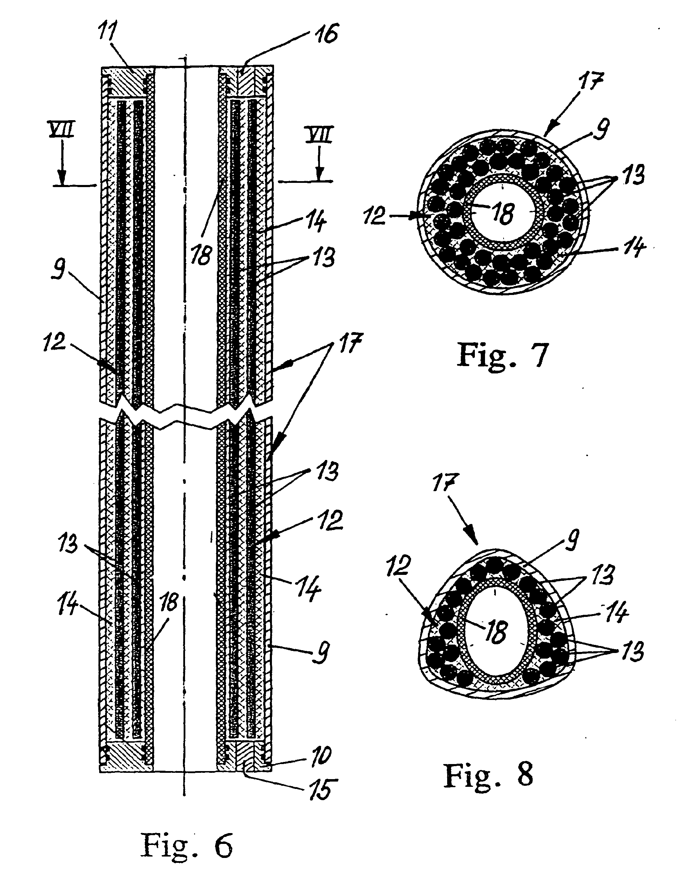

Fig. 6 zeigt eine alternative Ausführungsform der Kolbenstange. Diese Kolbenstange 17 unterscheidet sich zu derjenigen nach Fig. 3 dadurch, dass sie ein inneres Rohr 18 aus Kunststoffmaterial aufweist, das zu dem äußeren Rohr 9 parallel, insbesondere koaxial, angeordnet ist. Das Kunststoffmaterial für das innere Rohr 18 ist das gleiche, wie es in Verbindung mit dem äußeren Rohr 9 beschrieben ist. Es weist also neben ausreichenden Werten für mechanische Festigkeit und Steifigkeit insbesondere gute Gleiteigenschaften auf. Das innere Rohr 18 ist an seinen Enden in den Abschlussteilen 10 und 11 dieser Kolbenstange fixiert, wozu diese Teile je mit einer zentralen Öffnung versehen sind, derart, dass wenigstens eine dieser Öffnungen einen Durchmesser aufweist, der gleich oder etwas größer ist als der Innendurchmesser des inneren Rohres 18.

Das innere Rohr 18 dient zur Aufnahme einer weiteren Kolbenstange, beispielsweise einer solchen Kolbenstange, wie sie in Verbindung mit den Figuren 3, 4 und 5 beschrieben ist. Es kann aber auch eine Kolbenstange verwendet werden, die, als letzte ausfahrende Kolbenstange, homogen nur aus einem Kunststoffmaterial besteht, z. B. aus PVC, also kein Verbundbauteil ist.

Bei dieser alternativen Kolbenstange 17 handelt es sich also um eine hohle Kolbenstange, die im Regelfall eine weitere Kolbenstange aufnimmt, so dass eine teleskopische Kolbenstange geschaffen ist. Die hohle Kolbenstange hat somit auch eine Zylinderfunktion. Abhängig von den jeweiligen Einsatzbedingungen ist es natürlich auch möglich, dass die innere Kolbenstange wiederum eine hohle Kolbenstange ist, so dass die Schaffung einer mehrfach teleskopierenden Kolbenstange möglich ist.

Die Querschnittsdarstellung nach Fig. 7 zeigt, dass sowohl das äußere Rohr 9 als auch das innere Rohr 18 im Querschnitt kreisförmig ausgebildet sind. Es ist jedoch auch möglich, wie Fig. 8 zeigt, dass beide Querschnitte abweichend von einer Kreisform ausgebildet sein können. Während das äußere Rohr 9 einen dreieckigen Querschnitt aufweist, der mit demjenigen nach Fig. 5 vergleichbar ist, weist das innere Rohr 18 einen ovalen Querschnitt auf, der besonders strömungsgünstig ist. Selbstverständlich können diese Querschnittsformen auch umgekehrt gewählt werden. Weiterhin ist es möglich, dass nur der eine Rohrquerschnitt kreisförmig ist, während der Querschnitt des anderen Rohres von einer Kreisform abweicht. Falls abweichende Querschnittsformen für die Rohre 9 und 17 gewählt werden, wird es sich im Regelfall um ein regelmäßiges Polygon handeln. Andere Querschnittsformen sind jedoch nicht ausgeschlossen.

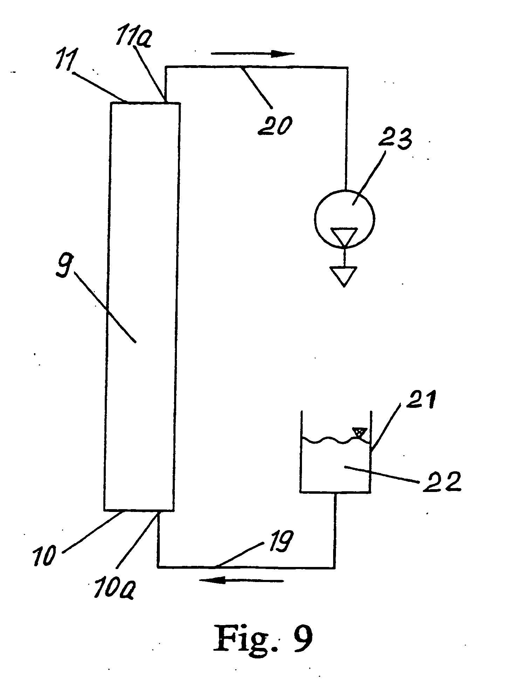

Es ist nun ein Verfahren zur Herstellung einer Kolbenstange nach den vorstehend beschriebenen Ausführungsbeispielen in Verbindung mit Fig. 9 erläutert.

Zunächst wird das äußere Rohr 9 der Kolbenstange 3 hergestellt, d. h. im Wesentlichen aus einem Halbzeug aus dem vorgenannten Kunststoffmaterial auf die gewünschte Länge zugeschnitten und in eine Haltevorrichtung eingespannt. Das Rohr 9 kann bereits mit einem der beiden Abschlussteile 10, 11 versehen werden, bevor die Füllung 12 eingebracht wird. In das aufnahmefähig in einem Werkzeug gehaltene Rohr 9 werden dann die Kunststoffverstärkungsfasern 13 eingebracht, derart, dass im Falle einer Kolbenstange nach Fig. 3 der gesamte Innenraum des äußeren Rohres 9 gefüllt ist. Dann werden die beiden Abschlussdeckel 10 und 11 bzw. der noch fehlende Abschlussdeckel mit dem Rohr 9 verbunden. Da die Abschlussdeckel 10, 11 entsprechende Arbeitsöffnungen 10a, 11a aufweisen, werden an diese Öffnungen eine Zuleitung 19 und eine Vakuumleitung 20 angeschlossen. Die Zuleitung 19 ist andererseits an einen Vorratsbehälter 21 angeschlossen, der einen Vorrat 22 an Klebstoff oder Gießharz mit Klebfähigkeit aufweist. Die Vakuumleitung 20 ist andererseits an eine Vakuumpumpe 23 angeschlossen. Zum Füllen des in seinem Inneren mit den Verstärkungsfasern 13 ausgestatteten äußeren Rohres 9 mit dem Klebstoff bzw. mit dem klebenden Gießharz wird von der Vakuumpumpe 23 ein Vakuum erzeugt, das über die Vakuumleitung 20 im Inneren des Rohres 9 eine Saugwirkung entfaltet, so dass aus dem Vorratsbehälter 21 der Verbindungswerkstoff 14, 22 in das äußere Rohr 9 eingesogen wird. Somit füllen sich sämtliche verbliebene Zwischenräume in dem äußeren Rohr 9 mit dem Verbindungswerkstoff, und nach Aushärtung dieses Werkstoffes ist in dem Rohr 9 eine feste und biegesteife Füllung 12 entstanden. Nach Aushärtung des Verbindungswerkstoffes werden die Arbeitsöffnungen 10a und 11 a mit den Stopfen 15 und 16 oder in anderer geeigneter Weise verschlossen. Falls es erforderlich ist, kann die äußere Fläche des äußeren Rohres 9 noch einer üblichen mechanischen Endbearbeitung unterworfen werden, um die Gleiteigenschaft der so hergestellten Kolbenstange 3 noch weiter zu verbessern.

Zur Herstellung einer Kolbenstange nach Fig. 6 wird in Ergänzung zu den vorstehend beschriebenen Herstellungsschritten einer Kolbenstange nach Fig. 3 vor dem Einbringen der Füllung 12 das innere Rohr 18 in dem äußeren Rohr 9 positioniert. Hierzu wird vorteilhaft eines der Abschlussteile 10, 11 am äußeren Rohr 9 montiert, so dass das innere Rohr 18 dann an diesem Abschlussteil montiert werden kann. Der so zwischen den beiden Rohren 9 und 18 gebildete Zwischenraum wird nun mit den Verstärkungsfasern 13 gefüllt, wonach das andere Abschlussbauteil montiert wird. Es folgt dann das Anschließen dieser so vorbereiteten Kolbenstange an den Vorratsbehälter 21 und an die Vakuumpumpe 23 über die auch in diesem Fall vorgesehenen Arbeitsöffnungen 10a, 11a der Abschlussbauteile 10 bzw. 11. Sodann folgt das Einsaugen des fließfähig vorbereiteten Verbindungswerkstoffes in den Zwischenraum zwischen den beiden Rohren 9 und 18 mittels der Vakuumanwendung über die Leitung 20.

Die so hergestellte Kolbenstange aus Kunststoff wird dann, falls gewünscht, mit einem Kolben, vorzugsweise ebenfalls aus Kunststoff, versehen. Das andere Ende der Kolbenstange kann mit dem Befestigungsauge 8 vervollständigt oder, wenn eine teleskopierende Kolbenstange hergestellt werden soll, so ausgebildet sein, dass eine in dem inneren Rohr 18 laufende Kolbenstange gegen einen Anschlag des zugehörigen Abschlussbauteiles 11 zur Anlage kommt.

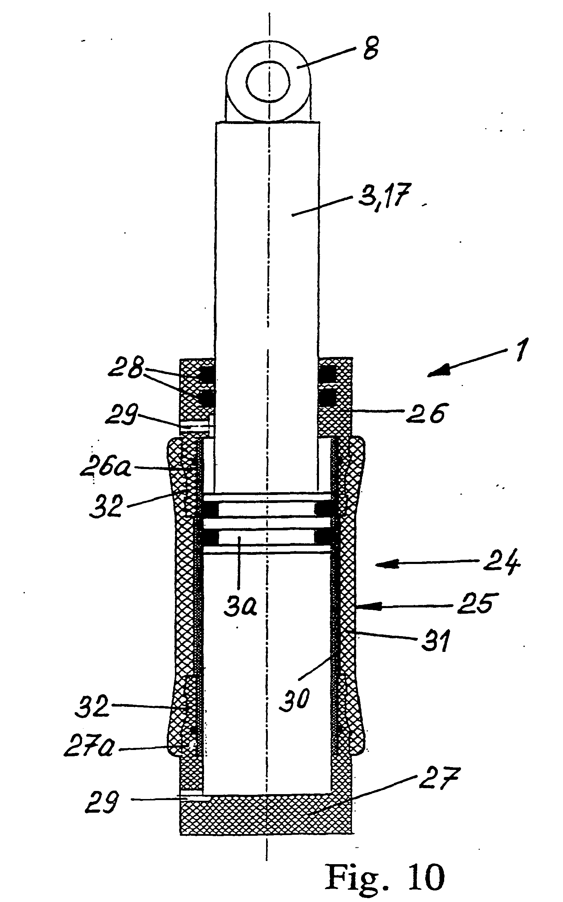

In weiterer erfindungsgemäßer Ausgestaltung kann die Zylindereinheit 1 nach Fig. 1 so ausgestaltet sein, dass auch der Zylinder dieser Einheit vollständig aus Kunststoffmaterial besteht. Ein solcher Zylinder 24 kann beispielsweise wie in Fig. 10 gezeigt aufgebaut sein.

Gemäß Fig. 10 umfasst der Zylinder 24 einen Zylinderkörper 25a in Form eines Verbundbauteiles mit Gleitfähigkeitseigenschaften sowie ein Kopfteil 26 mit dem üblichen Durchgang für die Kolbenstange 3 und ein Fußteil 27 zum unteren Abschluss des Zylinders 24. In dem Kopfteil 26 befinden sich die üblichen Dichtungsringe 28 zur Verhinderung des unbeabsichtigten Austretens von Fluid aus dem Innenraum des Zylinders. Das Kopfteil und das Fußteil sind je mit einem Fluidanschluss 29 für die Zu- und Ableitung des Arbeitsfluides für den Zylinder 24 versehen. Vorteilhaft bestehen das Kopfteil 26 und das Fußteil 27 aus einem Kunststoff ausreichender mechanischer Festigkeit. Alternativ ist es jedoch möglich, diese beiden Teile auch aus Metall herzustellen.

Der in Verbundbauweise hergestellte Zylinderkörper 25a besteht aus einem Innenrohr 30 aus gleitfähigem Kunststoffmaterial und einer die Außenseite des Innenrohres und teilweise die Außenseite des Kopfteiles 26 und des Fußteiles 27 fest umgebenden Verstärkung 31 aus miteinander verbundenem Kunststofffasermaterial. Das Material für das Innenrohr 30 kann ein thermoplastisches oder auch eine duroplastisches Kunststoffmaterial sein, und zwar jeweils ein solches, wie es weiter vorstehend in Verbindung mit den beiden Rohren 9 und 18 der Kolbenstange 3 angegeben ist. Die Verstärkung 31, welche dem Zylinderkörper 25a die wesentliche mechanische Festigkeit, Formstabilität bzw. Steifigkeit verleiht, ist ein Kunststofffasermaterial, wie es in Verbindung mit dem Fasermaterial 13 für die Kolbenstange 3 beschrieben ist. Bei der Verwendung solcher Fasern ist es möglich, dass diese auch miteinander kombiniert werden können.

Das Fußteil 27 wie auch das Kopfteil 26 ist je mit einen zylindrischen Fortsatz 27a bzw. 26a versehen, wobei jeder Fortsatz einerseits das Innenrohr 30 dichtend übergreift und andererseits die Verstärkung 31 untergreift, wie es aus Fig. 10 deutlich zu ersehen ist. Die beiden Fortsätze sind auf ihrer Außenseite mit einer Formschlussausbildung 32 zur Aufnahme je eines Endabschnittes der Verstärkung 30 aus dem genannten Kunststofffasermaterial versehen. Diese Formschlussausbildung sorgt dafür, dass neben einer kraftschlüssigen Verbindung zwischen der Verstärkung 31 und den Fortsätzen 26a, 27a auch eine formschlüssige Verbindung zwischen diesen Teilen besteht, um sicherzustellen, dass sich das Fußteil 27 und das Kopfteil 26 nicht von dem Zylinderkörper 25a im Betrieb der Zylindereinheit lösen. Die Formschlussausbildung 32 kann z. B. aus Rillen und/oder kleinen Widerhaken bestehen.

Zur Herstellung des Zylinders 24 nach Fig. 10 kann auf folgende Weise vorgegangen werden: Es wird ein zylindrisches Rohrstück, welches das zylindrische Innenrohr 30 bildet, aus dem bereits weiter vorstehend genannten thermoplastischem oder duroplastischem Kunststoff mit Gleiteigenschaften hergestellt. Dieses Rohrstück kann mit Fasern der bereits genannten Art verstärkt sein, die beispielsweise längsverlaufend in dem Rohrstück angeordnet sind, und zwar verteilt in dem thermoplastischen oder duroplastischen Kunststoffmaterial. Im Falle der Verwendung eines Plungerkolbens können dann das Kopfteil 26 und das Fußteil 27 mit ihrem Fortsatz 26a bzw. 27a auf das entsprechende Ende des das zylindrische Innenrohr 30 bildenden Rohrstückes aufgeschoben und vorzugsweise mittels eines Klebers mit dem Rohrstück verbunden werden. Bei Verwendung eines üblichen Kolbens 3a für die Kolbenstange 3 muss die Kolbenstange vorher durch das Kopfteil 26 gesteckt werden. Sodann werden die ebenfalls vorstehend genannten Kunststoffverstärkungsfasern, welche hier die äußere Verstärkung 31 des Zylinderkörpers 25a bilden, durch einen Wicklungsvorgang in Umfangsrichtung um die zylindrischen Fortsätze 26a und 27a der Fußteile 26 bzw. 27 und um den dazwischen verbleibenden axialen Abschnitt des Rohrstückes bzw. des Innenrohres 30 gewickelt. Dabei können die Kunststofffasern vor, während oder nach ihrem Wickeln mit einem aushärtbaren Klebstoff oder einem aushärtbarem Gießharz, der bzw. das in Verbindung mit der Kolbenstange 3 bzw. 17 vorstehend benannt ist, getränkt werden. Nachdem der Klebstoff bzw. das Gießharz ausgehärtet ist, ergibt sich ein insgesamt aus Kunststoff bestehendes Verbundbauteil für den Zylinderkörper 25a mit hoher mechanischer Festigkeit und Formsteifigkeit sowie guter innerer Gleiteigenschaft, um den hohen Belastungen der Zylindereinheit 1 in ihrem Betrieb standhalten zu können. Außer den schon genannten Vorteilen einer aus Kunststoff bestehenden Zylindereinheit besteht ein weiterer Vorteil darin, dass Zylinder relativ großer Länge hergestellt werden können, die einen großen Hub der Kolbenstange 3 bzw. 17 gestatten. Eine solche Kolbenhubstrecke kann beispielsweise bis zu zwei Metern und mehr betragen.

## Patentansprüche

1. Ausfahrzylindereinheit eines U-Bootes mit einer Kolbenstange, **dadurch gekennzeichnet, dass** die Kolbenstange als ein Verbundbauteil aus mehreren Kunststoffmaterialien ausgebildet ist, derart, dass die Kolbenstange ein äußeres Rohr (9) aus einem Kunststoffmaterial, das Gleitfähigkeitseigenschaften aufweist, und eine in diesem Rohr vorgesehene Füllung (12) aus einem Kunststoffmaterial, die der Kolbenstange mechanische Festigkeit und Steifigkeit verleiht, aufweist, wobei die Füllung (12) das Rohr (9) wenigstens teilweise ausfüllt und sich entlang der Innenseite des Rohrs erstreckt.

2. Ausfahrzylindereinheit nach Anspruch 1, **dadurch gekennzeichnet, dass** die Füllung (12) aus Kunststoffverstärkungsfasern (13) und aus einem diese Verstärkungsfasern miteinander und mit dem äußeren Rohr (9) fest verbindenden Werkstoff besteht.

3. Ausfahrzylindereinheit nach Anspruch 2, **dadurch gekennzeichnet, dass** die Kunststoffverstärkungsfasern (13) zu Bündeln gruppiert in dem äußeren Rohr (9) der Kolbenstange (3) angeordnet sind.

4. Ausfahrzylindereinheit nach Anspruch 2 oder 3, **dadurch gekennzeichnet, dass** die Kunststoffverstärkungsfasern aus Glasfasern, Kohlefasern, Aramidfasern oder einer Kombination daraus bestehen.

5. Ausfahrzylindereinheit nach Anspruch 2, 3 oder 4, **dadurch gekennzeichnet, dass** der verbindende Werkstoff aus einem aushärtbaren Klebstoff oder aus einem aushärtbaren Gießharz besteht.

6. Ausfahrzylindereinheit nach einem der Ansprüche 1 bis 5, **dadurch gekennzeichnet, dass** sie zusätzlich ein inneres Rohr (18) aus Kunststoff mit Gleiteigenschaften aufweist, das zu dem äußeren Rohr (9) aus Kunststoff parallel verlaufend angeordnet und zur Aufnahme einer weiteren Kolbenstange (3, 17) vorgesehen ist, und dass der Zwischenraum zwischen diesen beiden Rohren (9, 18) mit der genannten Füllung (12) aus Kunststoff ausgefüllt ist.

7. Ausfahrzylindereinheit nach einem der vorangehenden Ansprüche, **dadurch gekennzeichnet, dass** das innere Rohr (18) oder beide Rohre (9, 18) der Kolbenstange (3) aus einem thermoplastischen oder einem duroplastischen Kunststoffmaterial besteht/bestehen.

8. Ausfahrzylindereinheit nach Anspruch 7, **dadurch gekennzeichnet, dass** das thermoplastische oder duroplastische Kunststoffmaterial mit Verstärkungsfasern versehen ist.

9. Ausfahrzylindereinheit nach Anspruch 7 oder 8, **dadurch gekennzeichnet, dass** das Kunststoffmaterial mit Gleitmittelzusätzen versehen ist.

10. Ausfahrzylindereinheit nach einem der vorangehenden Ansprüche, **dadurch gekennzeichnet, dass** wenigstens eines der beiden Rohre (9, 18) der Kolbenstange (3, 17) einen Umfangsverlauf aufweist, der von einem Kreisverlauf abweicht und vorzugsweise ein regelmäßiges Polygon ist.

11. Ausfahrzylindereinheit nach einem der vorangehenden Ansprüche mit einem mit einem Fluid: betreibbaren Zylinder, in dem die Kolbenstange axial verfahrbar angeordnet ist; **dadurch gekennzeichnet, dass** der Zylinder (24) einen Zylinderkörper (25a) in Form eines Verbundbauteiles aufweist, der bzw. das aus einem Innenrohr (30) aus gleitfähigem Kunststoffmaterial und einer die Außenseite dieses Innenrohres fest umgebenden Verstärkung (31) aus miteinander verbundenem Kunststofffasermaterial besteht, die bzw. das dem Verbundbauteil mechanische Festigkeit, Formstabilität und Steifigkeit verleiht.

12. Ausfahrzylindereinheit nach Anspruch 11, **dadurch gekennzeichnet, dass** das Innenrohr (30) des Zylinderkörpers (25a) aus einem thermoplastischen oder aus einem duroplastischen Kunststoffmaterial besteht.

13. Ausfahrzylindereinheit nach Anspruch 11 oder 12, **dadurch gekennzeichnet, dass** die Verstärkung (31) für das Innenrohr (30) des Zylinderkörpers (25a) aus Glasfasern, Kohlefasern, Aramidfasern oder einer Kombination daraus besteht und dass diese Fasern mittels eines aushärtbaren Klebers oder eines aushärtbaren Gießharzes fest miteinander und mit dem Innenrohr (30) verbunden sind.

14. Ausfahrzylindereinheit nach einem der Ansprüche 11 bis 13, **dadurch gekennzeichnet, dass** das eine Ende des Zylinderkörpers (25a) mit einem Fußteil (27) aus Kunststoff verschlossen und das andere Ende des Zylinderkörpers (25a) mit einem den Durchlauf der Kolbenstange (3, 17) erlaubenden Kopfteil (26) aus Kunststoff versehen ist und dass Fußteil und Kopfteil je einen zylindrischen Fortsatz (26a, 27a) aufweisen, der einerseits das Innenrohr (30) des Zylinderkörpers (25a) übergreift und andererseits die Verstärkung (31) des Zylinderkörpers (25a) untergreift.

15. Ausfahrzylindereinheit nach Anspruch 14, **dadurch gekennzeichnet, dass** die beiden Fortsätze (26, 27) auf Ihrer Außenseite mit einer Formschlussausbildung (32), vorzugsweise aus Rillen und/oder Widerhaken bestehend, zur Aufnahme je eines Endabschnittes der Verstärkung (31) des Zylinderkörpers (25a) versehen sind.

## Claims

1. An extension cylinder unit of a submarine with a piston rod, **characterised in that** the piston rod is designed as a composite component of several plastic materials, in a manner such that the piston rod comprises an outer tube (9) of a plastic material which has sliding properties, and a filling (12) of a plastic material which is provided in this tube and which gives the piston rod mechanical strength and stiffness, wherein the filling (12) fills out the tube (9) at least partly and extends along the inner side of the tube.

2. An extension cylinder unit according to claim 1, **characterised in that** the filling (12) consists of plastic reinforcement fibres (13) and of a material which firmly connects these reinforcement fibres to one another and to the outer tube (9).

3. An extension cylinder unit according to claim 2, **characterised in that** the plastic reinforcement fibres (13) are arranged grouped into bundles in the outer tube (9) of the piston rod (3).

4. An extension cylinder unit according to claim 2 or 3, **characterised in that** the plastic reinforcement fibres consist of glass fibres, carbon fibres, aramide fibres or a combination thereof.

5. An extension cylinder unit according to claim 2, 3 or 4, **characterised in that** the connecting material consists of a curable adhesive or of a curable casting resin.

6. An extension cylinder unit according to one of the claims 1 to 5, **characterised in that** it additionally comprises an inner tube (18) of plastic with sliding properties, which is arranged running parallel to the outer tube (9) of plastic, and is provided for receiving a further piston rod (3, 17), and that the intermediate space between these two tubes (9, 18) is filled out with the mentioned fitting (12) of plastic.

7. An extension cylinder unit according to one of the preceding claims, **characterised in that** the inner tube (18) or both tubes (9, 18) of the piston rod (3) consists/consist of a thermoplastic or of a duroplastic plastic material.

8. An extension cylinder unit according to claim 7, **characterised in that** the thermoplastic or duroplastic plastic material is provided with reinforcement fibres.

9. An extension cylinder unit according to claim 7 or 8, **characterised in that** the plastic material is provided with lubricant additions.

10. An extension cylinder unit according to one of the preceding claims, **characterised in that** at least one of the two tubes (9, 18) of the piston rod (3, 17) has a peripheral course which differs from a circular course, and is preferably a regular polygon.

11. An extension cylinder unit according to one of the preceding claims, with a cylinder which may be operated with a fluid, in which the piston rod is arranged in an axially displaceable manner, **characterised in that** the cylinder (24) comprises a cylinder body (25a) in the form of a composite component, said cylinder body/composite component consisting of an inner tube (30) of anti-friction plastic material and of a reinforcement (31) of plastic fibre material connected to one another, which firmly surrounds the outer side of this inner tube, said reinforcement or plastic fibre material giving the composite component mechanical strength, shape stability and stiffness.

12. An extension cylinder unit according to claim 11, **characterised in that** the inner tube (30) of the cylinder body (25a) consists of a thermoplastic or of a duroplastic plastic material.

13. An extension cylinder according to claim 11 or 12, **characterised in that** the reinforcement (31) for the inner tube (30) of the cylinder body (25a) consists of glass fibres; carbon fibres; aramide fibres: or a: combination thereof, and that these fibres are connected firmly to one another and to the inner tube (30) by way of a curable adhesive or a curable casting resin.

14. An extension cylinder unit according to one of the claims 11 to 13, **characterised in that** the one end of the cylinder body (25a) is closed with a foot part (27) of plastic, and the other end of the cylinder body (25a) is provided with a head part (26) of plastic permitting the passage of the piston rod (3, 17), and **in that** the foot part and head part in each case comprise a cylindrical continuation (26a, 27a) which on the one hand engages over the inner tube (30) of the cylinder body (25a) and on the other hand engages below the reinforcement (31) of the cylinder body (25a).

15. An extension cylinder unit according to claim 14, **characterised in that** the two continuations (26, 27) on their outer side are provided with a positive fit formation (32), preferably consisting of grooves and/or barbs, for receiving in each case one end section of the reinforcement (31) of the cylinder body (25a).

## Revendications

1. Unité de cylindre rétractable pour sous-marin, comportant une tige de piston, **caractérisée en ce que** la tige de piston est réalisée en tant qu'élément de structure composite réalisée en plusieurs matériaux en matière plastique, de telle sorte que la tige de piston présente un tube extérieur (9) réalisé en un matériau en matière plastique qui présente des propriétés de capacité de glissement, et une garniture (12), prévue dans ce tube, réalisée en un matériau en matière plastique, qui confère à la tige de piston une résistance mécanique et une rigidité, la garniture (12) remplissant au moins en partie le tube (9) et s'étendant le long du côté intérieur du tube.

2. Unité de cylindre rétractable selon la revendication 1, **caractérisée en ce que** la garniture (12) est constituée de fibres de renforcement (13) en matière plastique et d'une matière de liaison permettant de rendre solidaires ces fibres de renforcement les unes avec les autres et avec le tube extérieur (9).

3. Unité de cylindre rétractable selon la revendication 2, **caractérisée en ce que** les fibres de renforcement (13) en matière plastique sont dispersées et regroupées en faisceaux dans le tube extérieur (9) de la tige de piston (3).

4. Unité de cylindre rétractable selon la revendication 2 ou 3, **caractérisée en ce que** les fibres de renforcement en matière plastique se composent de fibres de verre, de fibres de carbone, de fibres d'aramide ou d'une combinaison de ces fibres.

5. Unité de cylindre rétractable selon la revendication. 2, 3 ou 4, **caractérisée en ce que** la matière de liaison est constituée d'un adhésif durcissable ou d'une résine coulée durcissable.

6. Unité de cylindre rétractable selon l'une des revendications 1 à 5, **caractérisée en ce qu'**elle présente en plus un tube intérieur (18) réalisé dans une matière plastique offrant des qualités de glissement, qui est disposé de manière parallèle au tube extérieur (9) en matière plastique et qui est prévu pour le logement d'une autre tige de piston (3, 17), et **en ce que** l'espace libre entre ces deux tubes (9, 18) est rempli de la garniture (12) mentionnée en matière plastique.

7. Unité de cylindre rétractable selon l'une des revendications précédentes, **caractérisée en ce que** le tube intérieur (18) ou les deux tubes (9, 18) de la tige de piston (3) est/sont réalisé(s) dans une matière plastique thermoplastique ou duroplastique.

8. Unité de cylindre rétractable selon la revendication 7, **caractérisée en ce que** la matière plastique thermoplastique ou duroplastique comporte des fibres de renforcement.

9. Unité de cylindre rétractable selon la revendication 7 ou 8, **caractérisée en ce que** la matière plastique comporte des additifs lubrifiants.

10. Unité de cylindre rétractable selon l'une des revendications précédentes, **caractérisée en ce qu'**au moins l'un des deux tubes (9, 18) de la tige de piston (3, 17) présente un pourtour qui diverge d'un tracé circulaire et qui est de préférence un polygone régulier.

11. Unité de cylindre rétractable selon l'une des revendications précédentes, comportant un cylindre qui peut fonctionner avec un fluide et dans lequel la tige de piston est disposée de façon à pouvoir se déplacer dans le sens axial, **caractérisée en ce que** le cylindre (24) présente un corps de cylindre (25a) ayant la forme d'un élément de structure composite qui est constitué d'un tube intérieur (30) réalisé dans un matériau en matière plastique apte à glisser et d'un renforcement (31) entourant de manière fixe le côté extérieur de ce tube intérieur; réalisé en un matériau en fibres plastiques liées les unes aux autres, et conférant à l'élément de structure composite une résistance mécanique; une stabilité de forme et une rigidité.

12. Unité de cylindre rétractable selon la revendication 11, **caractérisée en ce que** le tube intérieur (30) du corps de cylindre (25a) est réalisé dans une matière plastique thermoplastique ou duroplastique.

13. Unité de cylindre rétractable selon la revendication 11 ou 12, **caractérisée en ce que** le renforcement (31) pour le tube intérieur (30) du corps de cylindre (25a) est constitué de fibres de verre, de fibres de carbone, de fibres d'aramide ou d'une combinaison de ces fibres, et **en ce que** ces fibres sont liées et rendues solidaires les unes des autres et avec le tube intérieur (30) au moyen d'un adhésif durcissable ou d'une résine coulée durcissable.

14. Unité de cylindre rétractable selon l'une des revendications 11 à 13, **caractérisée en ce que** l'une des extrémités du corps de cylindre (25a) est fermée par un pied (27) en matière plastique, et **en ce que** l'autre extrémité du corps de cylindre (25a) comporte une tête (26) en matière plastique permettant le passage de la tige de piston (3, 17) et **en ce que** le pied et la tête présentent chacun un prolongement (26a, 27a) cylindrique qui, d'une part, recouvre le tube intérieur (30) du corps de cylindre (25a) et, d'autre part, s'engage sous le renforcement (31) du corps de cylindre (25a).

15. Unité de cylindre rétractable selon la revendication 14, **caractérisée en ce que** les deux prolongements (26, 27) présentent, sur leur côté extérieur, une structure (32) à conjugaison de forme, constituée de préférence de rainures et/ou de crochets, pour recevoir respectivement la partie terminale du renforcement (31) du corps de cylindre (25a).
